# EUROPÄISCHE PATENTSCHRIFT

(11) **EP 2 029 907 B1**
(45) Veröffentlichungstag und Bekanntmachung des Hinweises auf die Patenterteilung: **13.04.2011**
(21) Anmeldenummer: 07725687.3
(22) Anmeldetag: 31.05.2007
(51) Int. Cl.: F16D 25/08

(54) **KUPPLUNG ZUR DREHMOMENTÜBERTRAGUNG ZWISCHEN EINER WELLE UND EINER KOAXIAL UM DIE WELLE ANGEORDNETEN WALZE**
CLUTCH FOR TORQUE TRANSMISSION BETWEEN A SHAFT AND A ROLLER WHICH IS ARRANGED COAXIALLY AROUND THE SHAFT
ACCOUPLEMENT DE TRANSMISSION DE COUPLE ENTRE UN ARBRE ET UN CYLINDRE DISPOSÉ DE MANIÈRE COAXIALE AUTOUR DE L'ARBRE

(30) Priorität: 01.06.2006 DE 202006008681 U
(43) Veröffentlichungstag der Anmeldung: 04.03.2009
(73) Patentinhaber: Oerlikon Textile GmbH & Co. KG, 42897 Remscheid (DE)
(72) Erfinder: KOTTE, Rainer, 63820 Elsenfeld-Rück (DE); KOTTE, Ralf, 63820 Elsenfeld-Rück (DE)
(74) Vertreter: Hamann, Arndt
(86) Internationale Anmeldenummer: PCT/EP2007/004799
(87) Internationale Veröffentlichungsnummer: WO 2007/137842

(56) Entgegenhaltungen:
- WO-A-87/03943
- GB-A- 649 306
- GB-A- 2 214 270
- US-A- 3 510 082

## Beschreibung

### Technisches Gebiet:

Die Erfindung betrifft eine Kupplung zur Drehmomentübertragung zwischen einer Welle und einer koaxial um die Welle angeordneten Walze, umfassend pneumatisch betätigbare Mittel zum wahlweise Unterbrechen und/oder Herstellen eines Kraftflusses zwischen Welle und Walze, gemäß dem Oberbegriff des Anspruchs 1.

### Stand der Technik:

Das Antreiben von drehbar gelagerten Trommeln, Zylindern oder Walzen stationärer Maschinen, wie etwa von Papiermaschinen, Rotationsmaschinen oder dergleichen, erfolgt üblicherweise durch Antreiben einer koaxial zu einer Walze verlaufenden Welle, wobei Welle und Walze mittels einer das Antriebsdrehmoment übertragenden Kupplung miteinander verbunden sind.

Besonders raumsparend sind hierbei solche Kupplungen, die koaxial zwischen einer Welle und einer koaxial zur Welle angeordneten Walze angeordnet sind.

Eine solche Kupplung zur Übertragung eines Drehmoments zwischen einer Spindel oder Welle und einer Walze ist aus DE 26 50 692 A1 bekannt. Eine gattungsgemäße Kupplung ist aus GB-A-649,306 bekannt.

Um einzelne Wellen und/oder Walzen kontinuierlich angetriebener Maschinen zeitweilig anhalten oder antreiben zu können, ist es erforderlich, zwischen Antrieb und der jeweiligen Walze eine vorzugsweise fernbetätigbare, aus- und/oder einrückbare Kupplung anzuordnen.

Eine solche Kupplung sollte möglichst einfach ansteuerbar, weitestgehend wartungsfrei und mit einfachen Mitteln betreibbar sein. Darüber hinaus ist es anstrebsam, dass von den Mitteln zur Betätigung der Kupplung beispielsweise im Falle eines Defekts keine Explosionsgefahr, sowie keine Gefahr einer

Verunreinigung des mit einer jeweiligen Maschine hergestellten Produkts ausgeht. Andererseits sollten die Mittel möglichst einfach verfügbar sein.

Aus der DE 1 747 650 U1 ist eine pneumatisch betätigbare Scheibenkupplung für auf einer Antriebswelle frei drehbar gelagerte anzutreibende Seilscheiben, Riemenscheiben und dergleichen bekannt. Zur Betätigung der Kupplung ist ein von einem Rohrstück gebildeter Pneumatikzylinder vorgesehen, dessen Kolben von einer in dem Rohr angeordneten Scheibe gebildet wird. Die Kupplung wird bei einer Unterbrechung der Druckluftzufuhr mittels einer Feder gegen die Rückstellkraft des Kolbens ausgerückt. Die Kupplung ist am freien Ende der Antriebswelle angeordnet, wobei der Pneumatikzylinder sowie die Kupplungsscheiben einen größeren Durchmesser als die Welle und eine beispielsweise mit einer Seilscheibe verbundene Abtriebswelle aufweist. Nachteilig hieran ist, dass die bekannte Scheibenkupplung sowohl in axialer, als auch in radialer Richtung die Antriebs- und die Abtriebswelle überragt. Dadurch ist beispielsweise keine Lagerung der Wellen an dem Ende möglich, an dem die Scheibenkupplung angeordnet ist. Zudem wird hierdurch Bauraum benötigt, der in einer Vielzahl von Maschinen nicht zur Verfügung gestellt werden kann. Dies macht die bekannte Scheibenkupplung für Maschinen unbrauchbar, bei denen eine beidseitige Lagerung von Welle und darauf angeordneter Walze erforderlich ist. Darüber hinaus kann ein vollständiges Rückstellen der Kupplungsscheiben durch die Feder gegen die Rückstellkraft des Kolbens nicht sichergestellt werden, wodurch ein hoher Verschleiß der Kupplungsscheiben auftritt, da diese bereits bei Unterschreitung einer Mindestanpresskraft untereinander Schlupf aufweisen und sich so gegenseitig abschleifen.

### Aufgabe der Erfindung:

Eine Aufgabe der Erfindung ist es deshalb, eine Kupplung mit den oben genannten vorteilhaften Eigenschaften zu schaffen, die darüber hinaus einfach und kostengünstig aufgebaut ist, die möglichst einfach und ohne großen Schaltungsaufwand betätigbar ist, und die bei Maschinen anwendbar ist, bei denen eine beidseitige Lagerung von Welle und Walze erforderlich ist.

### Offenbarung der Erfindung und deren Vorteile:

Die Aufgabe wird bei einer Kupplung der eingangs genannten Gattung dadurch gelöst, dass die pneumatisch betätigbaren Mittel einen koaxial zwischen Welle und Walze angeordneten, gegenüber der Welle und der Walze drehbar gelagerten Pneumatikzylinder mit einer an seinem ausfahrbaren Ende angeordneten Kupplungsscheibe umfassen, welcher mit seinem Kolben auf eine gegenüber dem Kolben drehbar angeordnete, mit der Welle oder Walze drehfest verbundene Kupplungsscheibe einwirkt, und diese bei einer Betätigung der Kupplung gegen eine korrespondierende, mit der Walze oder Welle drehfest verbundene Fläche presst, und/oder von dieser abhebt.

Die erfindungsgemäße Kupplung weist gegenüber dem Stand der Technik den Vorteil auf, dass sie ohne zusätzlichen Bauraum zu benötigen ein wahlweises Unterbrechen oder Herstellen eines Kraftflusses zwischen einer Welle und einer koaxial zu der Welle angeordneten Walze ermöglicht und die Welle darüber hinaus an beiden Enden gelagert werden kann. Dadurch ist die erfindungsgemäße Kupplung bei Maschinen verwendbar, bei denen eine Hohe Präzision bei der Lagerung von Wellen und Walzen relativ zueinander durch eine beidseitige Lagerung erforderlich ist, beispielsweise bei Papiermaschinen, oder auch bei solchen Maschinen, bei denen die Wellen und Walzen aufgrund Ihrer Dimensionen hohe Massen aufweisen und somit ebenso eine beidseitige Lagerung erforderlich ist. Der Betrieb der erfindungsgemäßen Kupplung stellt darüber hinaus ein einfach verfügbares Mittel dar, das beispielsweise bei einem Defekt keine Explosionsgefahr birgt, oder die Qualität eines mit einer Maschine hergestellten Produkts, die mit einer erfindungsgemäßen Kupplung versehen ist, beispielsweise durch Verschmutzen gefährdet.

Der Gegenstand der Erfindung stellt somit eine mit Druckluft betätigbare Kupplung zur wahlweise Unterbrechung oder Herstellung einer Drehmomentübertragung zwischen koaxial angeordneten Wellen und Walzen zu Verfügung, welche einfach und kostengünstig aufgebaut ist, einfach und ohne großen Schaltungsaufwand betätigbar ist, und insbesondere bei Maschinen anwendbar ist, bei denen eine beidseitige Lagerung von Welle und Walze erforderlich ist.

Vorzugsweise umfasst der Pneumatikzylinder einen koaxial zwischen Welle und Walze angeordneten, kreisringförmigen Kolben. Dadurch kann die Welle durch den Pneumatikzylinder hindurchgeführt werden, wobei gleichzeitig eine größtmögliche Kolbenfläche erzielt wird.

Damit der Pneumatikzylinder sich nicht mit der Welle oder Walze mitdreht, ist es denkbar, den Pneumatikzylinder mit seinem dem Ende der Welle zugewandten Deckel mit einem Widerlager zu verbinden. Das Widerlager kann als Platte mit einer zentralen Öffnung zur Durchführung der Welle ausgebildet sein, welche mit einem zur Lagerung der Welle vorgesehenen Bauteil verbunden werden kann.

Eine andere vorteilhafte Ausgestaltung der Erfindung sieht vor, dass der Pneumatikzylinder eine Rückstellfeder umfasst, welche bei einer Unterbrechung der Druckluftzufuhr den Kolben des Pneumatikzylinders in eine Ausgangsposition zurückführt. Hierdurch wird sichergestellt, dass die Kupplungsscheibe bei Nichtbetätigung der Kupplung, also bei einer Unterbrechung der Druckluftzufuhr zum Pneumatikzylinder, sicher in die dann gewünschte Position gefahren wird, und nicht durch den Kolben des Pneumatikzylinders noch eine Anpresskraft der Kupplungsscheibe gegen die korrespondierende Fläche erzeugt wird. Dadurch wird ein übermäßiger Verschleiß der Kupplungsscheibe, beispielsweise durch Schleifen auf der korrespondierenden Fläche, vermieden.

Eine zusätzliche vorteilhafte Ausgestaltung der Erfindung sieht vor, dass die pneumatisch betätigbaren Mittel nur zum Unterbrechen oder Herstellen eines Kraftflusses zwischen der Welle und der Walze verwendet werden, und für den umgekehrten Vorgang, also das Herstellen oder Unterbrechen des Kraftflusses federbelastete Mittel vorgesehen sind. Hierdurch wird die Ansteuerung der Kupplung deutlich vereinfacht, insbesondere kann sichergestellt werden, dass durch die federbelasteten Mittel bei einem Ausfall der Druckluftversorgung ein vorzugsweise gewünschter Betriebszustand der Kupplung, beispielsweise eingekuppelt oder ausgekuppelt, hergestellt wird.

Eine besonders vorteilhafte Ausgestaltung der Erfindung sieht vor, dass die federbelasteten Mittel eine oder mehrere vorzugsweise koaxial zu einem Pneumatikzylinder angeordnete Druckfeder, beispielsweise eine Spiralfeder, Tellerfeder oder dergleichen umfassen.

Eine zusätzliche, besonders vorteilhafte Ausgestaltung der Erfindung sieht vor, dass der Kolben des Pneumatikzylinders bei einer Druckluftzufuhr die Kupplungsscheibe von der korrespondierenden Fläche gegen die Federbelastung abhebt, wobei die vorzugsweise als Druckfeder ausgeführten, federbelasteten Mittel dann, wenn der Pneumatikzylinder von der Druckluftversorgung abgeschnitten ist, also bei einer Unterbrechung der Druckluftzufuhr, die Kupplungsscheibe gegen die korrespondierende Fläche anpressen.

Eine vorteilhafte Ausgestaltung der Erfindung sieht vor, dass die Kupplungsscheibe drehfest mit der Walze, und die korrespondierende Fläche drehfest mit der Welle verbunden ist.

Eine andere vorteilhafte Ausgestaltung der Erfindung sieht vor, dass die drehfeste Verbindung zwischen Walze und Kupplungsscheibe mittels innen an der Walze parallel zu deren Längsachse verlaufender Nuten sowie an der Kupplungsscheibe angeordneten, in die Nuten eingreifender Vorsprünge erfolgt. Durch die Verwendung von Nuten und Vorsprüngen ist die Kupplungsscheibe relativ zur Walze längsverschiebbar. Ebenso ist denkbar, einen in der Walze eingepressten Mitnehmer vorzusehen, welcher die zur Mitnahme der Kupplungsscheibe vorgesehenen Nuten und/oder Vorsprünge aufweist. Dies vereinfacht die Herstellung maßgeblich, da der Umgang mit der relativ großen Walze sehr umständlich ist.

Eine besonders vorteilhafte Ausgestaltung der Erfindung sieht vor, dass die korrespondierende Fläche eine normal zur Längsachse der Welle verlaufende Fläche einer innen in der Walze angeordneten, drehfest mit der Welle verbundenen Nabe umfasst. Auf der korrespondierenden Fläche ist vorzugsweise ein Reibbelag angeordnet. Der Reibbelag ist vorzugsweise austauschbar.

### Kurzbeschreibung der Zeichnung, in der zeigen:

- Fig. 1: eine schematische Darstellung eines Längsschnitts durch eine koaxial zwischen einer Welle und einer Walze angeordnete erfindungsgemäße Kupplung,
- Fig. 2: eine perspektivische Ansicht der erfindungsgemäßen Kupplung aus Fig. 1 ohne Welle und Walze,
- Fig. 3: eine Seitenansicht der erfindungsgemäßen Kupplung aus Fig. 1, sowie
- Fig.4: eine perspektivische Detailansicht einer Kupplungsscheibe einer erfindungsgemäßen Kupplung.

### Wege zur Ausführung der Erfindung:

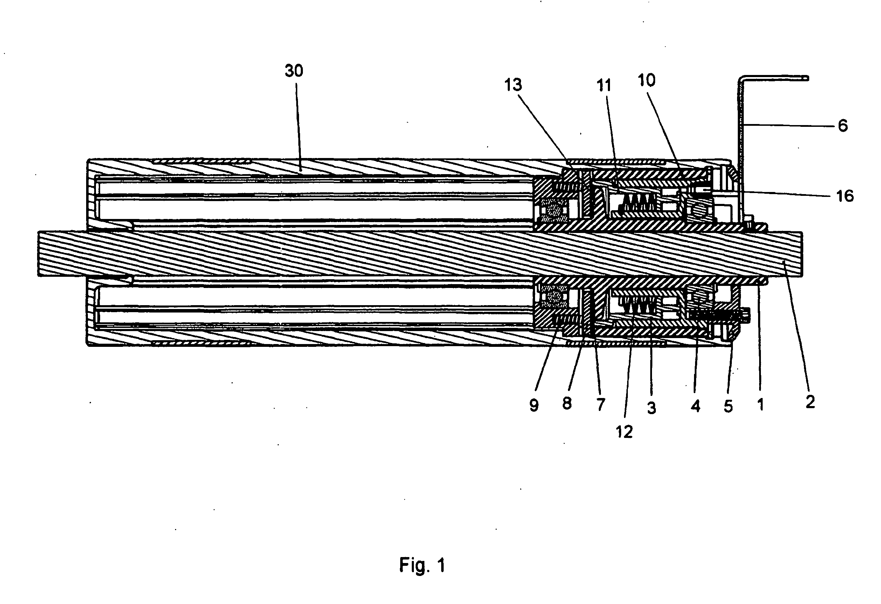

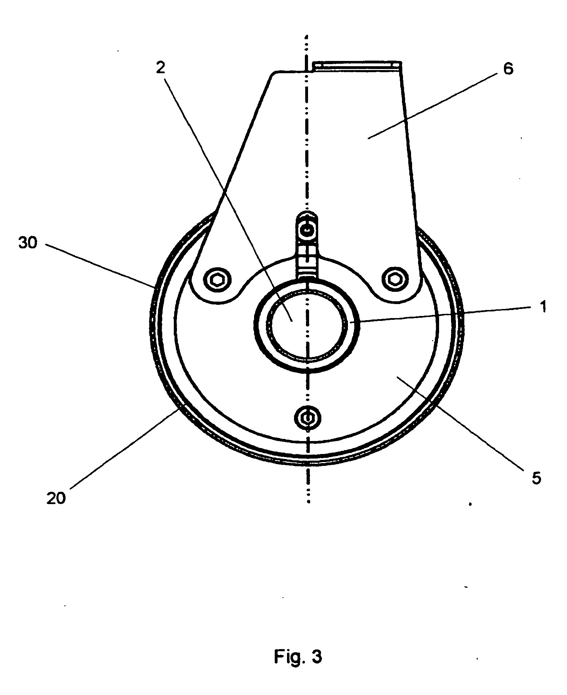

Eine in den Fig. 1 bis 3 dargestellte erfindungsgemäße Kupplung 20 ist innerhalb einer Walze 30 koaxial zwischen Walze 30 und einer Welle 2 angeordnet. Die Kupplung 20 umfasst im Wesentlichen einen koaxial zwischen Welle 2 und Walze 30 angeordneten, gegenüber Welle 2 und Walze 30 drehbar gelagerten Pneumatikzylinder 3 mit einem kreisringförmigen Kolben 11. Der Kolben 11 wirkt auf eine Kupplungsscheibe 8 ein, welche drehfest mit der Walze 30 verbunden ist. Eine drehfest mit der Welle 2 verbundene Nabe 1 weist eine mit der Kupplungsscheibe 8 korrespondierende Fläche 13 auf. Druckfedern 9 pressen die Kupplungsscheibe 8 gegen die korrespondierende Fläche 13. Der Kolben 11 des Pneumatikzylinders 3 hebt bei einer Druckluftzufuhr die Kupplungsscheibe 8 von der korrespondierenden Fläche 13 ab und unterbricht den Kraftfluss zwischen Welle 2 und Walze 30. Die Walze 30 bleibt dann stehen, auch wenn die Welle 2 weiterhin angetrieben wird. Die Kupplung 20 wird mit der Nabe 1 auf der Welle 2 festgeschraubt. In der Kupplung 20 befindet sich ein ringförmiger Pneumatikzylinder 3, welcher durch ein Kugellager 4 von den rotierenden Teilen der Kupplung 20 abgekoppelt ist. Der Pneumatikzylinder 3 ist mit einem Deckel 5 und einem Widerlager 6 verschraubt und wird dadurch festgehalten.

Ist der Pneumatikzylinder 3 drucklos, so ist die Kupplung 20 eingekuppelt und der Kraftverlauf geht über die Welle 2, die mit einem Reibbelag 7 versehene korrespondierende Fläche 13 der Nabe 1 auf die Kupplungsscheibe 8, welche durch Druckfedern 9 angedrückt wird. Zum Auskuppeln wird dem Pneumatikzylinder 3 Druckluft zugeführt. Beispielsweise wird in den Pneumatikzylinder 3 über ein externes 3/2-Wegeventil durch einen Lufteinlass 16 Druckluft eingeleitet. Dadurch fährt der Kolben 11 des Pneumatikzylinders 3 aus und drückt die Kupplungsscheibe 8 vom Reibbelag 7 der korrespondierenden Fläche 13 weg. Dadurch wird der Kraftfluss unterbrochen und die Walze 30 bleibt stehen.

Der Pneumatikzylinder 3 ist vorzugsweise einfachwirkend und der Kolben 11 wird durch Tellerfedern 12 zusammengedrückt. Die Mitnehmerkraft, entsprechend dem über die Kupplung 20 übertragbaren Drehmoment, kann durch die Stärke der Druckfedern 9 variiert werden.

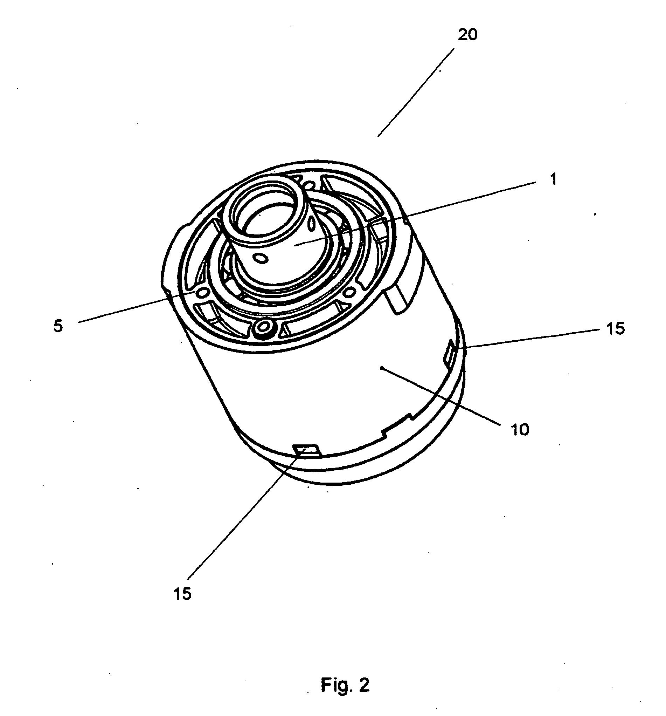

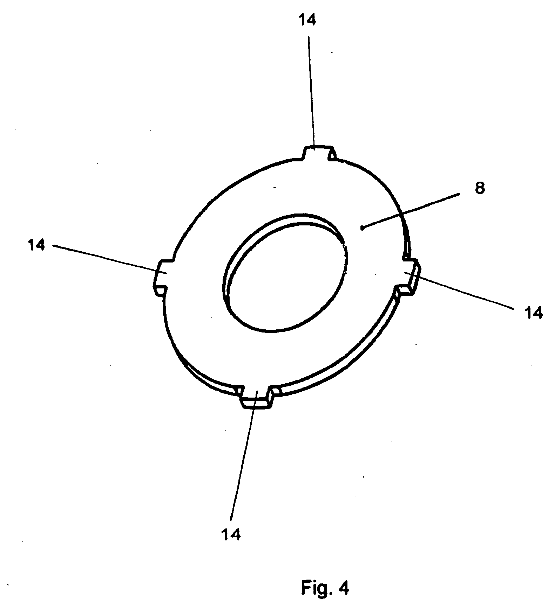

Die Kupplungsscheibe 8 weist an ihrem Umfang vier Segmente 14 auf (Fig. 4), welche in entsprechende Aussparungen 15 des Mitnehmers 10 eingreifen (Fig. 2) und so den Kraftfluss zur Walze herstellen.

Durch die erfindungsgemäße pneumatische Kupplung kann eine beispielsweise als Aufwickelzylinder, Friktionswalze oder dergleichen ausgeführte Walze von einer sich kontinuierlich drehenden Welle zu- oder abgekuppelt werden.

### Gewerbliche Anwendbarkeit:

Die Erfindung ist insbesondere im Bereich der Herstellung von Kupplungen zur Drehmomentübertragung zwischen koaxial angeordneten Wellen und Walzen gewerblich anwendbar.

### Bezugszahlenliste

- 1: Nabe
- 2: Welle
- 3: Pneumatikzylinder
- 4: Kugellager
- 5: Deckel
- 6: Widerlager
- 7: Reibbelag
- 8: Kupplungsscheibe
- 9: Druckfeder
- 10: Mitnehmer
- 11: Kolben
- 12: Tellerfeder
- 13: korrespondierende Fläche
- 14: Segment
- 15: Aussparung
- 16: Lufteinlass
- 20: Kupplung
- 30: Walze

## Patentansprüche

1. Kupplung (20) zur Drehmomentübertragung zwischen einer Welle (2) und einer koaxial um die Welle (2) angeordneten Walze (30), umfassend pneumatisch betätigbare Mittel zum wahlweise Unterbrechen und/oder Herstellen eines Kraftflusses zwischen Welle (2) und Walze (30), wobei die Kupplung (20) innerhalb der Walze (30) koaxial zwischen Welle (2) und Walze (30) angeordnet ist,
**dadurch gekennzeichnet,**
**dass** die pneumatisch betätigbaren Mittel einen gegenüber der Welle (2) und der Walze (30) drehbar gelagerten Pneumatikzylinder (3) umfassen, welcher mit seinem Kolben (11) auf eine drehbar angeordnete, mit der Welle (2) oder Walze (30) drehfest verbundene Kupplungsscheibe (8) einwirkt, und diese bei einer Betätigung der Kupplung gegen eine korrespondierende, mit der Walze (30) oder Welle (2) drehfest verbundene Fläche (13) presst, und/oder von dieser abhebt.

2. Kupplung nach Anspruch 1, **dadurch gekennzeichnet,**
**dass** der Pneumatikzylinder (3) einen koaxial zwischen Welle (2) und Walze (30) angeordneten, kreisringförmigen Kolben umfasst.

3. Kupplung nach Anspruch 1 oder 2, **dadurch gekennzeichnet,**
**dass** der Pneumatikzylinder (3) eine Rückstellfeder (12) umfasst, welche bei einer Unterbrechung der Druckluftzufuhr den Kolben (11) des Pneumatikzylinders (3) in eine Ausgangsposition zurückführt.

4. Kupplung nach einem der vorhergehenden Ansprüche, **dadurch gekennzeichnet, dass** die pneumatisch betätigbaren Mittel nur zum Unterbrechen oder Herstellen eines Kraftflusses zwischen der Welle (2) und der Walze (30) verwendet werden, und für das Herstellen oder Unterbrechen des Kraftflusses federbelastete Mittel vorgesehen sind.

5. Kupplung nach Anspruch 4, **dadurch gekennzeichnet,**
**dass** die federbelasteten Mittel eine Druckfeder (9) umfassen.

6. Kupplung nach einem der Ansprüche 4 oder 5, **dadurch gekennzeichnet,**
**dass** der Kolben (11) des Pneumatikzylinders (3) bei einer Druckluftzufuhr die Kupplungsscheibe (8) von der korrespondierenden Fläche (13) gegen die Federbelastung abhebt, wobei die federbelasteten Mittel (9) bei einer Unterbrechung der Druckluftzufuhr die Kupplungsscheibe (8) gegen die korrespondierende Fläche (13) anpressen.

7. Kupplung nach einem der vorhergehenden Ansprüche, **dadurch gekennzeichnet, dass** die Kupplungsscheibe (8) drehfest mit der Walze (30), und die korrespondierende Fläche (13) drehfest mit der Welle (2) verbunden ist.

8. Kupplung nach Anspruch 7, **dadurch gekennzeichnet,**
**dass** die drehfeste Verbindung zwischen Walze (30) und Kupplungsscheibe (8) mittels innen an der Walze (30) parallel zu deren Längsachse verlaufender Nuten (15) sowie an der Kupplungsscheibe (8) angeordneten, in die Nuten (15) eingreifender Vorsprünge (14) erfolgt.

9. Kupplung nach Anspruch 7, **dadurch gekennzeichnet,**
**dass** die drehfeste Verbindung zwischen Walze (30) und Kupplungsscheibe (8) mittels eines in der Walze (30) anordenbaren, parallel zur Längsachse der Walze (30) verlaufende Nuten (15) aufweisenden Mitnehmers (10), sowie an der Kupplungsscheibe (8) angeordneten, in die Nuten (15) des Mitnehmers eingreifender Vorsprünge (14) erfolgt.

10. Kupplung nach einem der vorhergehenden Ansprüche,
**dadurch gekennzeichnet, dass** die korrespondierende Fläche eine normal zur Längsachse der Welle (2) verlaufende Fläche (13) einer innen in der Walze (30) angeordneten, drehfest mit der Welle (2) verbundenen Nabe (1) umfasst.

## Claims

1. Clutch (20) for transmitting torque between a shaft (2) and a roller (30) arranged coaxially around the shaft (2), comprising pneumatically actuatable means for selectively interrupting and/or producing a force flow between the shaft (2) and roller (30), wherein the clutch (20) is arranged inside the roller (30) coaxially between the shaft (2) and roller (30),
**characterised in that**
the pneumatically actuatable means comprises a pneumatic cylinder (3) which is rotatably mounted relative to the shaft (2) and the roller (30), which pneumatic cylinder acts with its piston (11) on a rotatably arranged clutch disc (8) non-rotationally connected to the shaft (2) or roller (30) and presses said clutch disc, on actuation of the clutch, against a corresponding face (13) non-rotationally connected to the roller (30) or shaft (2), and/or lifts it therefrom.

2. Clutch according to claim 1, **characterised in that** the pneumatic cylinder (3) comprises a circular piston arranged coaxially between the shaft (2) and roller (30).

3. Clutch according to claim 1 or 2, **characterised in that** the pneumatic cylinder (3) comprises a restoring spring (12), which, upon an interruption of the compressed air supply, returns the piston (11) of the pneumatic cylinder (3) into a starting position.

4. Clutch according to any one of the preceding claims, **characterised in that** the pneumatically actuable means are only used to interrupt or produce a force flow between the shaft (2) and the roller (30), and spring-loaded means are provided to produce or interrupt the force flow.

5. Clutch according to claim 4, **characterised in that** the spring-loaded means comprise a compression spring (9).

6. Clutch according to one of claims 4 or 5, **characterised in that** the piston (11) of the pneumatic cylinder (3), upon a supply of compressed air, lifts the clutch disc (8) from the corresponding face (13) against the spring loading, wherein the spring-loaded means (9) presses the clutch disc (8) against the corresponding face (13) when the supply of compressed air is interrupted.

7. Clutch according to any one of the preceding claims, **characterised in that** the clutch disc (8) is non-rotationally connected to the roller (30) and the corresponding face (13) is non-rotationally connected to the shaft (2).

8. Clutch according to claim 7, **characterised in that** the non-rotational connection between the roller (30) and clutch disc (8) is formed by means of grooves (15) extending on the inside on the roller (30) parallel to the longitudinal axis thereof, and projections (14) arranged on the clutch disc (8) and engaging in the grooves (15).

9. Clutch according to claim 7, **characterised in that** the non-rotational connection between the roller (30) and clutch disc (8) is formed by means of a carrier (10), which can be arranged in the roller and has grooves (15) extending parallel to the longitudinal axis of the roller (30), as well as projections (14) arranged on the clutch disc (8) and engaging in the grooves (15) of the carrier.

10. Clutch according to any one of the preceding claims, **characterised in that** the corresponding face comprises a face (13) extending normally to the longitudinal axis of the shaft (2) of a hub (1) arranged on the inside in the roller (30) and non-rotationally connected to the shaft (2).

## Revendications

1. Accouplement (20) dédié à la transmission d'un couple de rotation entre un arbre (2) et un cylindre (30) disposé coaxialement autour dudit arbre (2), comprenant des moyens actionnables pneumatiquement en vue d'interrompre et/ou d'instaurer sélectivement un flux de force entre l'arbre (2) et le cylindre (30), ledit accouplement (20) étant logé à l'intérieur du cylindre (30), coaxialement entre ledit arbre (2) et ledit cylindre (30),
**caractérisé par le fait**
**que** les moyens actionnables pneumatiquement englobent un vérin pneumatique (3) qui est monté à rotation vis-à-vis de l'arbre (2) et du cylindre (30) ; qui agit, par son piston (11), sur un disque d'accouplement (8) monté à rotation et relié à l'arbre (2) ou au cylindre (30), avec verrouillage rotatif ; et qui, lors d'un actionnement de l'accouplement, presse ledit disque contre une surface complémentaire (13) reliée au cylindre (30) ou à l'arbre (2) avec verrouillage rotatif, et/ou décolle ledit disque de ladite surface.

2. Accouplement selon la revendication 1, **caractérisé par le fait que** le vérin pneumatique (3) renferme un piston en forme d'anneau circulaire, interposé coaxialement entre l'arbre (2) et le cylindre (30).

3. Accouplement selon la revendication 1 ou 2, **caractérisé par le fait que** le vérin pneumatique (3) comprend un ressort de rappel (12) qui, lors d'une interruption de la délivrance d'air comprimé, ramène le piston (11) dudit vérin pneumatique (3) à une position de départ.

4. Accouplement selon l'une des revendications précédentes, **caractérisé par le fait**
**que** les moyens actionnables pneumatiquement sont utilisés uniquement pour interrompre ou instaurer un flux de force, entre l'arbre (2) et le cylindre (30), des moyens à contrainte élastique étant prévus pour l'instauration ou l'interruption dudit flux de force.

5. Accouplement selon la revendication 4, **caractérisé par le fait**
**que** les moyens à contrainte élastique englobent un ressort de pression (9).

6. Accouplement selon l'une des revendications 4 ou 5, **caractérisé par le fait**
**que**, lors d'une délivrance d'air comprimé, le piston (11) du vérin pneumatique (3) décolle le disque d'accouplement (8) de la surface complémentaire (13), en opposition à la contrainte élastique, sachant que les moyens (9) à contrainte élastique pressent ledit disque d'accouplement (8) contre ladite surface complémentaire (13) lors d'une interruption de la délivrance d'air comprimé.

7. Accouplement selon l'une des revendications précédentes, **caractérisé par le fait**
**que** le disque d'accouplement (8) est relié au cylindre (30) avec verrouillage rotatif, et la surface complémentaire (13) est reliée à l'arbre (2) avec verrouillage rotatif.

8. Accouplement selon la revendication 7, **caractérisé par le fait**
**que** la liaison à verrouillage rotatif, entre le cylindre (30) et le disque d'accouplement (8), est établie par des encoches (15) s'étendant intérieurement sur ledit cylindre (30), parallèlement à l'axe longitudinal de ce dernier, ainsi que par des ergots (14) situés sur ledit disque d'accouplement (8) et pénétrant dans lesdites encoches (15).

9. Accouplement selon la revendication 7, **caractérisé par le fait**
**que** la liaison à verrouillage rotatif, entre le cylindre (30) et le disque d'accouplement (8), est établie par un organe d'entraînement (10) pouvant être logé dans ledit cylindre (30) et comportant des encoches (15) s'étendant parallèlement à l'axe longitudinal dudit cylindre (30), ainsi que par des ergots (14) situés sur ledit disque d'accouplement (8) et pénétrant dans les encoches (15) dudit organe d'entraînement.

10. Accouplement selon l'une des revendications précédentes,
**caractérisé par le fait que** la surface complémentaire englobe une surface (13), s'étendant perpendiculairement à l'axe longitudinal de l'arbre (2), d'un moyeu (1) disposé à l'intérieur du cylindre (30) et relié audit arbre (2) avec verrouillage rotatif.
